# EUROPÄISCHE PATENTSCHRIFT

(11) **EP 1 035 639 B1**
(45) Veröffentlichungstag und Bekanntmachung des Hinweises auf die Patenterteilung: **02.10.2002**
(21) Anmeldenummer: 00100399.5
(22) Anmeldetag: 08.01.2000
(51) Int. Cl.: H02M 7/00

(54) **Umformer für einen Drehstrommotor in Flurförderzeugen**
Converter for a three-phase motor in industrial trucks
Convertisseur pour moteur triphasé en chariot de manutention

(30) Priorität: 11.03.1999 DE 19910787
(43) Veröffentlichungstag der Anmeldung: 13.09.2000
(73) Patentinhaber: Jungheinrich Aktiengesellschaft, 22047 Hamburg (DE)
(72) Erfinder: Schlüter, Volkmar, Dipl.-Ing., 24558 Henstedt-Ulzburg (DE); Wrede, Hans, Dipl.-Ing., 22844 Norderstedt (DE); Baginski, Ralf, Dipl.-Ing., 21398 Neetze (DE); Freitag, Frank, Dipl.-Ing., 22393 Hamburg (DE); Mänken, Frank, Dipl.-Ing., 24558 Henstedt-Ulzburg (DE)
(74) Vertreter: Patentanwälte Hauck, Graalfs, Wehnert, Döring, Siemons, Schildberg

(56) Entgegenhaltungen:
- DE-A- 19 720 695

## Beschreibung

Die Erfindung bezieht sich auf einen Umformer für einen Drehstrommotor in Flurförderzeugen nach dem Oberbegriff des Patentanspruchs 1.

Als Fahr- oder Hubmotoren für batteriebetriebene Flurförderzeuge werden zunehmend Drehstrommotoren verwendet. Naturgemäß ist ein Umformer erforderlich, der die Dreiphasen-Wechselspannung für den Drehstrommotor aus der Batteriespannung erzeugt. Der Umformer enthält drei Halbbrücken, in denen jeweils zwei Halbleiterschalter in Form von Leistungstransistoren angeordnet sind, vorzugsweise MOSFETs oder auch IGBT. Der Umformer weist einen Leistungsteil auf mit Leistungstransistoren zur Erzeugung einer dreiphasigen Ausgangswechselspannung, einer Kondensatorbatterie als Pufferkapazität und einer Ansteuerungselektronik für die Leistungstransistoren. Ferner ist ein Steuerteil vorgesehen, welcher einen Rechenteil mit zugehöriger Software aufweist. Sowohl Leistungs- als auch Steuerteil sind auf einer Platine angeordnet, wobei vorzugsweise zwei getrennte Platinen vorgesehen sind. Da die Leistungstransistoren erhebliche Wärme erzeugen, sind sie einem Kühlkörper zugeordnet, der die aufgenommene Wärme an die Umgebung weitergibt. Es ist auch bekannt, Flächen des Kühlkörpers, z. B. Kühlrippen mit Hilfe eines externen Lüfters zu kühlen.

Aus DE 197 20 695 ist ein Umformer zur Erzeugung einer dreiphasigen Wechselspannung bekanntgeworden, bei dem alle Leistungstransistoren parallelgeschalteter Halbzweige der Drehstrombrücke auf einer ersten Stromschiene angeordnet sind und die Leistungstransistoren des jeweils anderen Halbzweiges der Brücke pro Phase auf einer gesonderten Stromschiene angeordnet sind, an der die jeweilige Phasenspannung abgenommen wird. Die Leistungstransistoren stehen in unmittelbarem Kontakt mit den Stromschienen, die gleichzeitig Teil eines Kühlkörpers sind.

Der Erfindung liegt die Aufgabe zugrunde, einen Umformer für einen Drehstrommotor in Flurförderzeugen zu schaffen, der äußerst kompakt aufgebaut ist, einfach montiert werden kann, eine ausreichende Wärmeabfuhr ermöglicht und gegen Schwingungen unempfindlich ist.

Diese Aufgabe wird durch die Merkmale des Patentanspruchs 1 gelöst.

Bei dem erfindungsgemäßen Umformer ist ein Kühlkörper vorgesehen, der drei parallele im Abstand angeordnete längliche Abschnitte aufweist. Diese Abschnitte können nach einer Ausgestaltung der Erfindung Rippen oder Stege eines einteiligen Kühlkörpers sein, der vorzugsweise im Strangpreßverfahren hergestellt ist, beispielsweise aus Aluminium oder einer Aluminiumlegierung. Mit Hilfe der Stege kann die Wärme optimal abgegeben werden, wobei der Kühlkörper auch zusätzliche Kühlrippen aufweisen kann, die ggf. auch von einem externen Lüfter gekühlt werden können.

Die Leistungstransistoren jeder Phase sind abwechselnd elektrisch isoliert an einem Abschnitt angebracht. Die Anlagefläche am länglichen Abschnitt für die Transistoren muß sehr glatt und eben sein, damit der Wärmeübergang vom Transistorgehäuse in den Kühlkörper optimal ist. Da ein Transistor mit dem Plus- und der andere mit dem Minuspotential verbunden werden muß, sind die Transistoren elektrisch voneinander zu isolieren. Zwischen den Transistoren und dem Kühlkörper befindet sich deshalb eine elektrisch isolierende, jedoch wärmeleitende Folie. Derartige Folien sind im Stand der Technik bekannt.

Um einen guten Wärmeübergang zu gewährleisten, müssen die Transistoren fest an die länglichen Abschnitte oder Stege des Kühlkörpers gepreßt werden. Zu diesem Zweck können die Gehäuse der Transistoren einzeln angeschraubt werden. Montagetechnisch günstiger ist es jedoch, wenn die Transistoren mit Hilfe von Federklammern angepreßt sind. Derartige Klammern, die gleichzeitig mehrere Transistoren befestigen, sind vorzugsweise U-förmig, wobei ein Schenkel das Transistorgehäuse gegen den länglichen Kühlkörperabschnitt drückt und der andere Schenkel auf der gegenüberliegenden Seite des länglichen Abschnitts anliegt. Die Klammer und der längliche Abschnitt können so geformt sein, daß die Federklammer im Betrieb nicht abrutscht. Beispielsweise kann auf der Außenseite des länglichen Abschnitts eine Hohlkehle geformt sein, die einen Hinterschnitt bildet und verhindert, daß die Klammer nach oben abrutscht.

Die länglichen Abschnitte oder Stege des Kühlkörpers bilden zwischen sich Fächer, in denen Platinenabschnitte untergebracht werden können, welche die Leistungselektronik enthalten einschließlich der Kondensatorbatterie. Da drei Reihen von Leistungstransistoren vorgesehen sind, nimmt ein Fach zwei Transistorreihen auf, während das andere Fach nur eine Reihe aufnimmt. Dementsprechend ist das eine Fach breiter als das andere.

Es sind verschiedene Möglichkeiten denkbar, die Platinenabschnitte in den Fächern anzubringen. Besonders vorteilhaft ist die Anbringung in Nuten der länglichen Abschnitte, in die die Platinenteile eingeschoben werden. Bevor dies geschieht, sind die Platinenabschnitte vollständig mit den Transistoren und den Kondensatoren bestückt.

Bei einer Drehstromsteuerung der beschriebenen Art treten außerordentlich hohe Ströme auf in der Größenordnung von mehreren hundert Ampere. Falls keine besonderen Vorkehrungen getroffen werden, müssen die Querschnitte der Leiterbahnen der Platinen entsprechend ausgelegt werden. Normalerweise sind diese zu klein hierfür. Wenn große Ströme über die Schichten der Leiterplatte geführt werden sollen, sind große Schichtdicken erforderlich oder sehr geringe Längen für die Leiterbahnen. Daher sieht sich Erfindung die Anordnung von Stromschienen parallel zu den Reihen der Transistoren vor, und zwar drei Stromschienen pro Transistorreihe, nämlich eine für die Phase, eine für das Minus- und die dritte für das Pluspotential. Dadurch werden kurze Wege vom Transistor durch die Leiterplatte zur Stromschiene und damit ein geringer Widerstand erhalten, was eine geringe Erwärmung und einen guten Wirkungsgrad zur Folge hat. Die Stromschienen werden vorzugsweise mit Hilfe von einzelnen Beinchen mit der Platine verlötet.

Da normalerweise nach außen nur ein Plus- und ein Minusanschluß vorgesehen sind, müssen die drei Plus- und die drei Minusschienen innerhalb der Steuerung jeweils untereinander verbunden werden. Daher sieht die Erfindung zwei oberhalb der länglichen Kühlkörperabschnitte quer zu diesen verlaufende Potentialausgleichsschienen vor, die die Minus- und die Plusschienen miteinander verbinden. Ebenso wie die Stromschienen können die Potentialausgleichsschienen aus einem geeigneten gut elektrisch leitenden Metall bestehen, vorzugsweise aus Kupferblech vorgegebener Dicke.

Die Potentialausgleichsschienen können nicht wie die Stromschienen auf der Leiterplatte aufrechtstehend quer zu diesen und zu den länglichen Abschnitten des Kühlkörpers verlaufen, weil sie den mittleren Abschnitt des Kühlkörpers kreuzen würden. Da die Platinenabschnitte bestückt in die Fächer eingeschoben werden, ist es zweckmäßig die Potentialausgleichsschienen erst im anschließenden Fertigungsgang anzubringen. Daher können an den Stromschienen entsprechende Vorkehrungen vorgesehen werden, um die Potentialausgleichsschienen in geeigneter Weise miteinander zu verbinden. Diese Verbindung muß fertigungstechnisch leicht realisierbar sein und darf in der elektrischen Leitfähigkeit durch Vibrationen, Korrosion, ständiges Erwärmen und Abkühlen usw. nicht verschlechtert werden. Die Bleche der Potentialausgleichsschienen können mit den Stromschienen mittels Blechschrauben verschraubt werden. Bei geringer Dicke der Bleche bereitet dies Probleme. Alternativ könnte an eine Schraubverbindung durch Schraube und Mutter gedacht werden. Dies setzt jedoch voraus, daß von unten bequem ein Zugang zur Schraubverbindung vorhanden ist, was bei der geforderten Kompaktheit normalerweise nicht der Fall ist. Statt einer Schraubverbindung ist daher eine Nietverbindung mit Blindnieten bevorzugt, da hier nur der Zugang von einer Seite erforderlich ist. Vorzugsweise werden Blindnieten verwendet, bei denen Dorn und Hülse aus Edelstahl bestehen, um die ausreichende mechanische Festigkeit, die Korrosionsfestigkeit, die thermische Dauerstabilität und die elektrische Leitfähigkeit ausreichend zu gewährleisten. Bei einem Blindniet wird die Hülse so lange durch den Kopf des Dorns verformt, bis der Dom abreißt. Unter ungünstigen Bedingungen kann sich der Kopf lösen und in die Steuerung fallen, Daher wird bevorzugt ein Becherdichtblindniet verwendet, z. B. nach DIN 7337. Hierbei bleibt der Kopf immer in dem Becher der Hülse gefangen und kann daher nicht in die Steuerung gelangen.

Die Länge der Stromschienen ergibt sich aus der Anzahl der nebeneinander angeordneten Transistoren und der Forderung nach kürzester Verbindung vom Transistor zur Stromschiene in der Leiterplatte. Die Dicke und die Höhe der Stromschienen bestimmen den Leitungsquerschnitt, der sich an den Kabeln der Zuleitung zur Steuerung orientiert. Dicke Stromschienen von geringer Höhe haben den Vorteil eines niedrigen Schwerpunktes bezogen auf die Leiterplatte, in die die Stromschiene eingelötet wird. Dies bringt schwingungstechnisch Vorteile.

Die Stromschienen haben, wie bereits weiter oben angemerkt, vorzugsweise an der Unterkante eine Vielzahl von Beinchen, mit denen sie in der Leiterplatte fixiert werden und mit denen die elektrische Verbindung hergestellt wird. Die Länge der Beinchen wird bestimmt durch die Dicke der Leiterplatte und durch den für die Anordnung von SMD-Bauteilen gewünschten Zwischenraum zwischen Stromschiene und Leiterplatte. Die Beinchen haben die restliche Masse der Stromschienen zu tragen, so daß die Stromschienen insgesamt in seitlicher Richtung sehr leicht zu Schwingungen angeregt werden können. Im Übergang von den Beinchen zur Stromschiene herrscht ein mehrachsiger Spannungszustand, weshalb es sinnvoll sein kann, bei allen Stromschienen einen Übergangsradius vorzusehen.

Der Leitungsquerschnitt der Stromschienen braucht nicht über die Länge konstant zu sein. Bei gegebener Dicke (Blechdicke) kann deshalb die Höhe kontinuierlich mit steigendem Abstand zum Anschlußpunkt verringert werden, so daß sich Eigenkreisfrequenz erhöht und die Schwingungsanfälligkeit im Betrieb deutlich verringert wird.

Auch die Schwingungsamplitude bei seitlicher Schwingung wird im Bereich geringerer Bauhöhe geringer. Somit können die Stromschienen näher aneinander herangerückt werden, ohne daß sie sich berühren, was zu einer kompakten Bauweise führt.

Die Stromeinspeisung der Leistungstransistoren in den Stromschienen beginnt im hinteren Bereich, wo die Stromschienen niedriger sein können. Im vorderen Bereich (Seite der Leistungskabel) müssen die Stromschienen höher sein und stabilisiert werden, was durch die Potentialausgleichsschienen erfolgen kann. Zu diesem Zweck kann aus den verbundenen Plus- und Minusschienen eine Lasche nach oben herausgeführt und am oberen Ende umgebogen werden, damit ein einfaches Blech für die Potentialausgleichsschiene in der oben beschriebenen Art und Weise angebracht werden kann. Außerdem können die Schienen an den Einspeisungsenden mit einer Lasche versehen werden, über die sie am Klemmbrett befestigt sind, wodurch eine weitere Stabilisierung in Längsrichtung erfolgt. Die Stromschienen der drei Phasen haben im vorderen

Bereich naturgemäß keine Potentialausgleichsschienen. Sie können einerseits dadurch stabilisiert werden, daß sie eine seitliche Lasche zum Anschluß an einen Shunt (Strommessung) haben und andererseits kann die Stromschiene für die dritte Phase direkt nach außen auf das Klemmbrett geführt und dort, wie schon beschrieben, fixiert werden.

Es liegt nahe, je Phase eine gleiche Anzahl von Glättungskondensatoren zu verwenden. Da im vorliegenden Fall jedoch nur zwei Fächer vorgesehen sind, können vorzugsweise auch nur zwei Reihen von Glättungskondensatoren in den Fächern angeordnet werden. Eine erste Gruppe oder Reihe kann dann direkt über die Leiterplatte mit zwei Phasen verbunden werden, während eine kleinere Gruppe von Glättungskondensatoren in dem anderen Fach mit der dritten Phase verbunden ist. Trotz der größeren Anzahl von Kondensatoren bedeutet dies eine stärkere Belastung dieser Gruppe. Über die Potentialausgleichsschienen ergibt sich jedoch eine indirekte Verbindung, so daß die kleine Gruppe die andere Gruppe unterstützt. Durch den beschriebenen asymmetrischen Aufbau kann der Platz für eine Kondensatorreihe eingespart werden, wodurch die gesamte Steuerung insgesamt schmaler und kompakter wird.

Die Platinenabschnitte in den beiden Fächern können separat sein. Vorzugsweise wird jedoch eine einteilige Platine verwendet, die über den größten Teil ihrer Länge, parallel zur Längsachse, durch einen Längsschlitz geteilt ist, damit sie in die Nuten der drei Stege des Kühlkörpers eingeschoben werden kann. Dadurch ergibt sich ein überstehender Platinenteil, auf dem nach einer weiteren Ausgestaltung der Erfindung die Ansteuerelektronik für die Transistoren angeordnet sein kann.

Die Ansteuerungselektronik benötigt ein sauberes, störungsfreies, nicht verrauschtes Bezugspotential. Hierfür kann das Nullpotential der Minusstromschienen gewählt werden. Da jedoch in den Minusstromschienen hohe gepulste Ströme fließen, ist auf allen ein anderes, unsauberes, zwar nur leicht, aber für die Ansteuerelektronik zu stark von Null abweichendes Bezugspotential vorhanden. Deshalb wird nach einer Ausgestaltung der Erfindung auf diesem Teil der Platine eine weitere kleinere Stromschiene mit der Leiterplatte verlötet. Sie verbindet die drei Minusstromschienen der Phasen über die Leiterplatte miteinander. Es fließen somit kleine Ausgleichsströme, und man erhält ein sauberes Bezugspotential. Die dritte Potentialausgleichsschiene steht vorzugsweise im rechten Winkel zu den Stromschienen, so daß sich für diese eine mechanische Stabilisierung ergibt.

Hinter den Befestigungslaschen für die Potentialausgleichsschienen kann die Höhe der Stromschienen verringert werden. Damit bietet sich hier ein Platz für eine Steuerplatine an, die zusätzlich für die Steuerung erforderlich ist. Um eine schnelle und kostengünstige Fixierung zu verwirklichen, können Abstandshalter verwendet werden, auf die die Steuerplatine ohne zu schrauben aufgeclipst werden kann. Auch die Demontage ist dann einfach zu gestalten. Da die Abstandshalter befestigt werden müssen, können sie ebenfalls über eine Schnappverbindung verbunden werden, vorzugsweise in Laschen, die einteilig mit Stromschienen bzw. der dritten Potentialausgleichsschiene geformt sind. Insbesondere bei kurzen Abstandshaltern führt die Anbringung der Steuerplatine weiterhin zu einer Stabilisierung der Stromschienenanordnung.

Mit einem Umformer der Erfindung läßt sich eine äußerst kompakte Steuerung erreichen, wobei keine der drei Dimensionen gegenüber der anderen deutlich abweicht. Dies wird erreicht durch eine sinnreiche Verteilung der Transistoren, eine entsprechend Aufteilung der Kondensatorbatterie sowie durch Reduzierung des Leitungsquerschnitts der Stromschienen in der Höhe.

Daneben ergibt sich eine gute Zugänglichkeit des Umformers für alle Montageschritte. Es sind ausreichende Vorkehrungen gegen den Einfluß von Schwingungen getroffen.

Die Erfindung wird nachfolgend anhand eines in Zeichnungen dargestellten Ausführungsbeispiels näher erläutert.
- Fig. 1: zeigt die Schaltungsanordnung für eine Drehstrombrücke eines Umformers, nach der Erfindung.
- Fig. 2: zeigt perspektivisch einen Kühlkörper für einen Umformer nach der Erfindung.
- Fig. 3: zeigt die Endansicht des Kühlkörpers nach Fig. 2.
- Fig. 4: zeigt eine Draufsicht auf die Leistungsplatine des Umformers nach der Erfindung ohne Bestückung.
- Fig. 5: zeigt die Platine nach Fig. 4 nach der Bestückung.
- Fig. 6: zeigt perspektivisch den fertigen Umformer nach der Erfindung.
- Fig. 7: zeigt perspektivisch eine Minusschiene des Umformers nach Fig. 6.

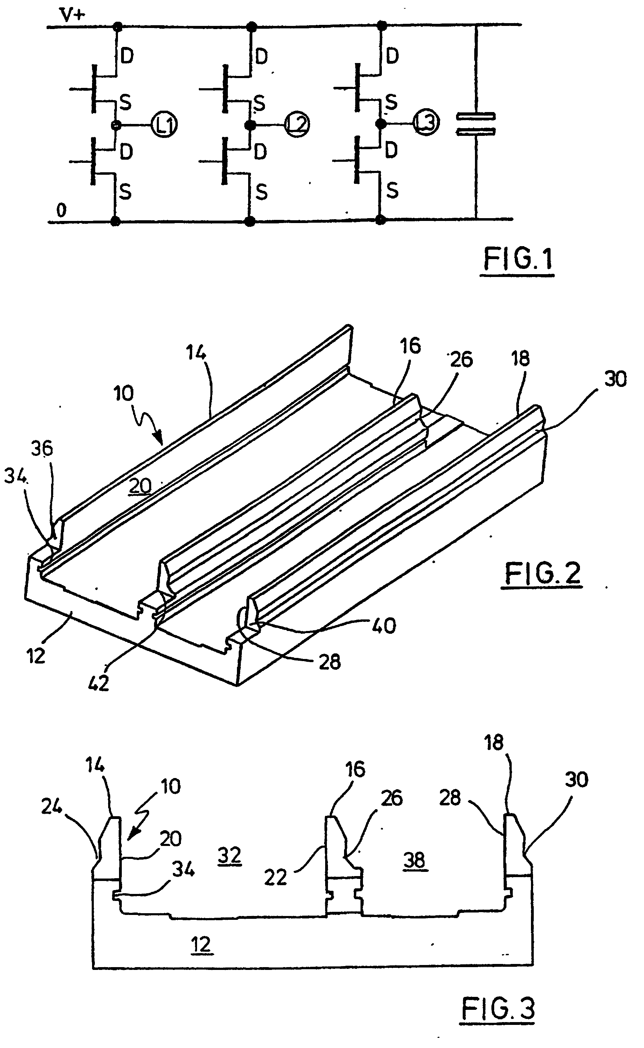

In Fig. 1 sind die drei Zweige einer Halbbrücke dargestellt zur Erzeugung einer dreiphasigen Wechselspannung mit Hilfe von MOSFETs. Der Drainanschluß D der oberen Transistoren ist mit dem Pluspotential einer Gleichspannungsquelle V+ und der Sourceanschluß der unteren Transistoren mit dem Minuspotential 0 verbunden. Die drei Phasen L1, L2, L3 sind an der Verbindung von Sourceanschluß und Drainanschluß der Transistoren eines Zweiges angeschlossen. Die am Pluspotential liegenden Transistoren werden der High-Side und die anderen der Low-Side zugerechnet. Das Gate der einzelnen Transistoren ist in bekannter Weise mit einer Ansteuerungselektronik (nicht gezeigt) verbunden. Mit den Gleichstrompotentialen ist eine Pufferkapazität verbunden, die üblicherweise aus einer Vielzahl von Kondensatoren (Kondensatorbatterie) gebildet ist.

In den Figuren 2 und 3 ist ein Kühlkörper 10 dargestellt, der aus einem geeigneten Material, beispielsweise Aluminium oder einer Aluminiumlegierung, im Strangpreßverfahren hergestellt ist. Er weist einen Plattenabschnitt 12 auf, an dem an einer Seite drei parallele, im Abstand verlaufende Stege 14, 16, 18 angeformt sind. Die einander zugekehrten Seiten der Stege 14, 16 sind mit ebenen glatten Flächen 20, 21 versehen. Auf der gegenüberliegenden Seite ist eine im Querschnitt dreieckförmige Kehle 24 bzw. 26 geformt. Der dem Steg 16 zugekehrte Abschnitt des Stegs 18 ist ebenfalls mit einer ebenen glatten Fläche 28 versehen und auf der gegenüberliegenden Seite mit einer Hohlkehle 30. Die Stege 14, 16, 18 bilden zwischen sich Fächer 32, 38. Unterhalb der Flächen 20, 22 und 28 sind in den Stegen 14, 16, 18 auf den den Fächern 32, 38 zugekehrten Seiten im Querschnitt rechteckige Nuten 34 geformt. Die Stege 14, 18 an den Längsseiten des Plattenabschnitts 12 erstrecken sich bis zum "hinteren" Ende des Kühlkörpers 10, während am vorderen Ende jeweils eine Ausnehmung 36 bzw. 40 gebildet ist. Der mittlere Steg 16, der gegenüber der Längsmitte zum Steg 18 versetzt liegt, endet im Abstand zum hinteren Ende des Kühlkörpers 10 und weist am vorderen Ende eine Ausnehmung 42 auf, die auf gleicher Höhe liegt wie die Ausnehmungen 36, 40.

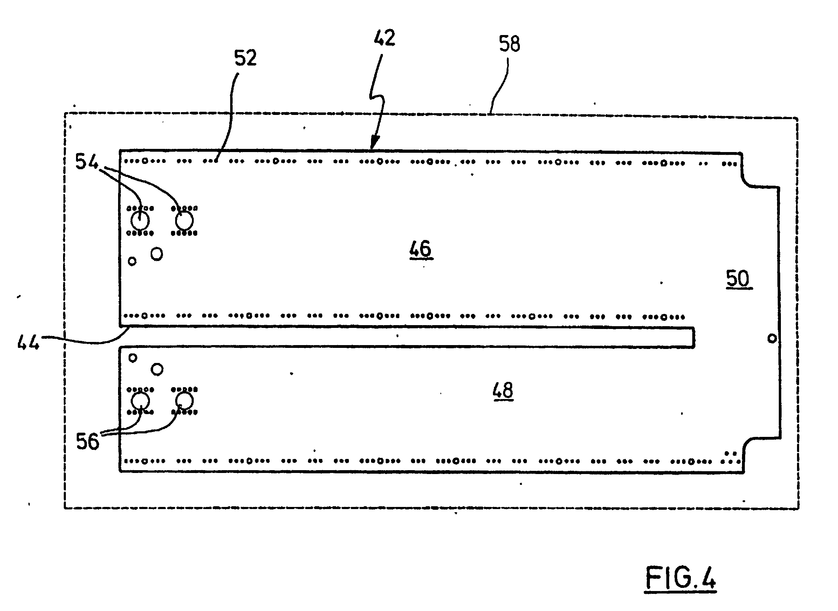

Eine Platine 42 gemäß Fig. 4, welche die Teile der Brücke nach Fig. 1 und die Ansteuerungselektronik hält (was in Fig. 4 nicht dargestellt ist), ist von der Außenkontur so geformt, daß sie in die Nuten 34 der Stege 14, 18 passend eingeschoben werden kann. Sie weist außerdem einen parallel zur Längsachse verlaufenden Längsschlitz 44 auf, der so angeordnet ist, daß die Kanten des Schlitzes in die Nuten 34 des mittleren Steges 16 eingreifen. Die Platine 42 wird von hinten in den Kühlkörper 10 nach Fig. 2 eingeschoben, bis das Ende des Schlitzes 44 gegen das zugeordnete Ende des mittleren Steges 16 anschlägt. Auf diese Weise ist die Platine 42 mechanisch stabil im Kühlkörper 10 gehalten.

Durch den Schlitz 44 ist die Platine 42 in zwei Abschnitte 46, 48 sowie in einen überstehenden Abschnitt 50 unterteilt. Die Abschnitte 46, 48 weisen Löcher 52 auf, die jeweils zu dritt angeordnet sind und die drei Anschlußbeinchen eines MOSFET aufnehmen. Löcher 54 bzw. 56 dienen zur Anbringung und elektrischen Verbindung von Laschen, worauf weiter unten noch eingegangen wird. Alle in der Platine 42 vorzusehenden Bohrungen sind jedoch nicht gezeigt. Der Platinenabschnitt 50 dient zur Anbringung der Ansteuerungselektronik, was jedoch nicht gezeigt ist.

Die gestrichelte Umrandung 58 deutet den Umriß des Kühlkörpers 10 an.

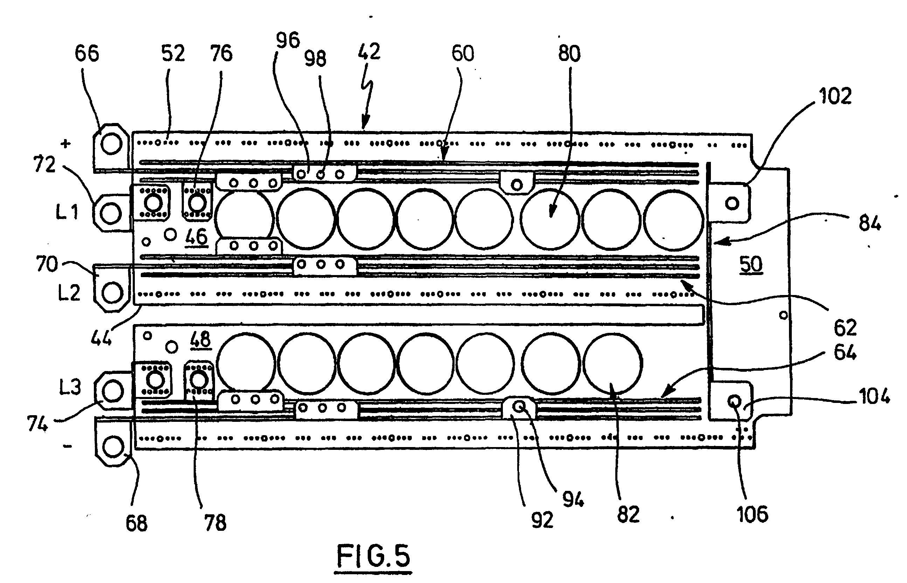

In Fig. 5 ist gezeigt, wie die Platine 42 teilweise bestückt ist. Man erkennt, daß parallel zu den Lochreihen mit den Löchern 52 für die Aufnahme der Transistoren, die aus Vereinfachungsgründen nicht dargestellt sind, jeweils eine Anordnung von drei aufrecht stehenden flachen Stromschienen vorgesehen ist. Im Platinenabschnitt 46 sind zwei Stromschienenanordnungen 60, 62 und im Platinenabschnitt 48 ist eine Stromschienenanordnung 64 vorgesehen. Die Anordnungen 60 bis 64 liegen jeweils relativ nahe an der Reihe der Transistoren. Jede Schienenanordnung 60 bis 64 weist eine zu einer Phase L1, L2, L3 gehörende Stromschiene auf sowie jeweils eine Plusschiene und eine Minusschiene. Die Plusschiene der Schienenanordnung 60 und die Minusschiene der Schienenanordnung 64 sind jeweils mit einer nach außen geführten Anschlußlasche 66, 68 versehen. Die Phasenschiene der mittleren Anordnung 62 ist mit einer Anschlußlasche 70 versehen. Anschlußlaschen 72, 74 für die anderen beiden Phasen sind mit dem zugehörigen Platinenabschnitt 46, 48 verbunden. Die zugehörigen Schienen weisen Laschen 76 bzw. 78 auf, die mit dem Platinenabschnitt 46, 48 verbunden sind. Zwischen den Laschen 72, 76 bzw. 74, 78 findet eine elektrische Verbindung über eine Leiterbahn der Platinenabschnitte statt.

In dem Raum zwischen den Schienenanordnungen 60, 62 einerseits und zwischen der Schienenanordnung 64 und dem Schlitz 44 andererseits ist jeweils eine Reihe 80 bzw. 82 von Kondensatoren auf dem zugeordneten Platinenabschnitt angeordnet. Die Kondensatorreihe 80 weist einen Kondensator mehr auf.

Auf dem Platinenabschnitt 50 ist eine aufrechte Potentialausgleichsschiene 84 angeordnet und mit dieser verlötet. Sie verbindet die Minusleitungsabschnitte der Platine miteinander zwecks Bildung eines Minus-Bezugspotentials für die Ansteuerungselektronik (nicht gezeigt).

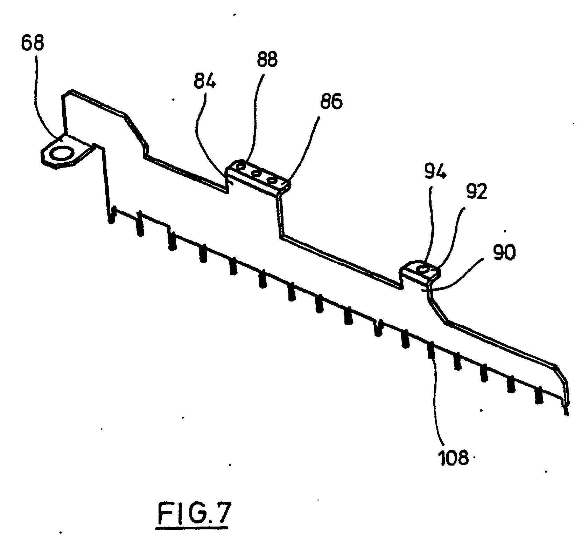

In Fig. 7 ist die Minusschiene der Schienenanordnung 64 nach Fig. 5 perspektivisch dargestellt. Man erkennt, daß diese von der Anschlußlasche 68 nach hinten in der Höhe stufenweise abnimmt. In dem Bereich mit der größten Höhe weist sie einen nach oben ragenden Abschnitt 84 auf, von dem eine seitlich abgebogene Lasche 86 abgeht mit drei Löchern 88. Im Abstand dazu weist die Schiene einen weiteren aufrechten Abschnitt 90 auf mit einer abgebogenen Lasche 92 und einem Loch 94. Wie in Fig. 5 zu erkennen, weisen auch andere Schienen der Schienenanordnungen 60 bis 64 Laschen 96 mit Löchern 98 im vorderen Bereich auf. Die Potentialausgleichsschiene 84 weist an der Oberkante im Abstand abgebogene Laschen 102 bzw. 104 auf mit jeweils einem Loch 106.

Wie in Fig. 7 zu erkennen, weist die Minusschiene an der Unterkante eine Reihe von Beinchen 108 auf zwecks Verlötung mit dem zugehörigen Platinenabschnitt. Die übrigen Stromschienen der Schienenanordnungen 60 bis 64 sind ähnlich geformt.

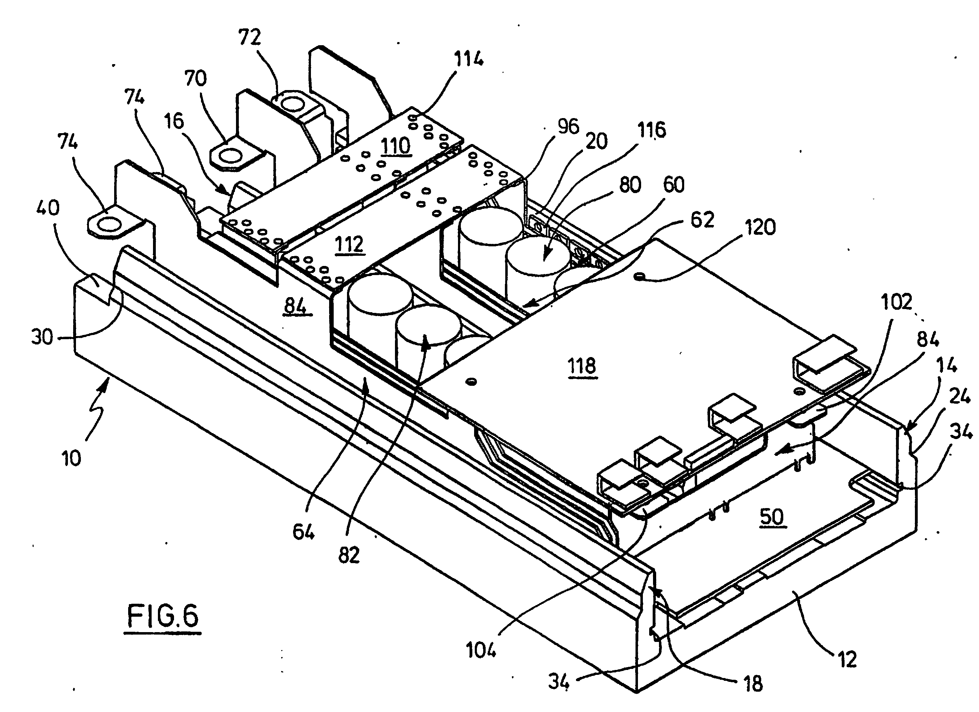

In Fig. 6 ist zu erkennen, daß nahe dem vorderen Ende zwei Blechplatten 110, 112 quer zu den Stromschienenanordnungen oberhalb der Kondensatorreihen 80, 82 in geringem Abstand parallel zueinander verlaufen. Sie sind mit Löchern 114 versehen zwecks Verbindung mit den oben beschriebenen Laschen der Plusschienen einerseits und der Minusschienen andererseits. Sie dienen mithin als Potentialausgleichsschienen. Sie sind aus dem gleichen Material wie die Stromschienen, vorzugsweise aus Kupferblech. Die Verbindung über die Löcher erfolgt vorzugsweise mit Hilfe von Becherblindnieten, wobei jedoch andere Befestigungsformen denkbar sind.

In Fig. 6 erkennt man ferner einige MOSFETs 116, deren Gehäuse glatt an der zugehörigen glatten Fläche 20 anliegen. Es versteht sich, daß bezüglich der anderen Stege 16, 18 die MOSFETs in gleicher Weise angeordnet sind, und zwar bezüglich High-Side und Low-Side abwechselnd. Um eine elektrische Isolierung zu erhalten, ist eine elektrisch isolierende, jedoch gut wärmeleitende Folie zwischen diesen und den zugeordneten glatten Flächen angeordnet. Die Befestigung der MOSFETs 116 an den Stegen 14, 16, 18 erfolgt mit Hilfe von nicht gezeigten U-förmigen Klammern, die von oben aufgesteckt werden, wobei der eine Schenkel sich pressend gegen das Gehäuse der MOSFETs 116 anlegt und der andere Schenkel in die zugeordnete Hohlkehle 24, 26, 30 eingreift. Letztere verhindert, daß die Klammern nach oben abrutschen. Eine Klammer befestigt gleichzeitig mehrere, z. B. zwei oder drei MOSFETs 116 am zugehörigen Steg. Die Befestigung erfolgt, nachdem die komplette bestückte Platine, wie sie teilweise bestückt in Fig. 5 dargestellt ist, in den Kühlkörper 10 von hinten eingeschoben wurde, wie dies weiter oben bereits beschrieben wurde. Erst im Anschluß erfolgt dann die Anbringung der Potentialausgleichsschienen 110, 112. Ebenfalls nachträglich erfolgt die Anbringung einer Steuerplatine 118, die im Bereich der vier Ecken jeweils mit einem Befestigungsloch 120 versehen ist. Die Löcher 120 sind mit den Löchern 94 bzw. 106 der Laschen 92 bzw. 104 ausgerichtet. Die Löcher 94, 106 können geeignete Abstandshalter über eine Schnappverbindung aufnehmen. Die Abstandshalter sind am oberen Ende so beschaffen, daß die Steuerplatine 118 schnappend auf die Abstandshalter aufbringbar sind. Da die Schienen der Schienenanordnungen 60 bis 64 im hinteren Bereich eine weitaus geringere Höhe haben, kann die Steuerplatine 118 etwa in Höhe der Potentialausgleichsschienen 110, 112 liegen.

## Patentansprüche

1. Umformer für einen Drehstrommotor in Flurförderzeugen, bei dem Leistwigstransistoren zur Erzeugung einer dreiphasigen Ausgangswechselspannung jeweils in den Zweigen einer Brücke zwischen einer positiven und einer negativen Gleichspannung betrieben werden und die Phasenwechselspannungen an jeweils einer Stromschiene abnehmbar sind, bei dem ferner die Transistoren an einem Kühlkörper angebracht sind und eine Kondensatorbatterie an die Gleichspannungspotentiale angeschlossen ist, **gekennzeichnet durch** folgende Merkmale:
- Der Kühlkörper (10) weist drei parallel im Abstand angeordnete längliche Abschnitte (14, 16, 18) auf
- Die Transistoren (116) jeder Phase sind abwechselnd nebeneinander elektrisch isoliert an einem Abschnitt (14, 16, 18) angebracht
- In den beiden Fächern (32, 38) zwischen den Kühlkörperabschnitten (14, 16, 18) sind Platinenabschnitte (46, 48) angeordnet, mit denen u.a. die Transistoren (116) und die Kondensatoren der Kondensatorbatterie (80, 82) verbunden sind, wobei der in dem breiteren Fach angeordnete Platinenabschnitt (46) zwei Reihen von Transistoren (116) aufweist
- Nahe den Reihen von Transistoren (116) ist jeweils eine Anordnung aus drei parallel und im Abstand verlaufenden Stromschienen (60, 62, 64) vorgesehen, von denen eine erste Stromschiene für eine Phase, eine zweite Stromschiene für das Minus- und eine dritte Stromschiene für das Pluspotential vorgesehen ist und
- Oberhalb der länglichen Kühlkörperabschnitt(14, 16, 18) sind zwei quer zu diesen verlaufende Potentialausgleichsschienen (110, 112) vorgesehen, die die Minus- und die Plusschienen der drei Stromschienenanordnungen (60, 62, 64) miteinander verbinden.

2. Umformer nach Anspruch 1, **dadurch gekennzeichnet, daß** eine weitere Potentialausgleichsschiene (84) vorgesehen ist, die die Minusschienen der Phasen über Platinenabschnitte miteinander verbindet.

3. Umformer nach Anspruch 1 oder 2, **dadurch gekennzeichnet, daß** die länglichen Abschnitte (14, 16, 18) Stege an einem einteiligen, vorzugsweise durch Strangpressen hergestellten Kühlkörper (10) sind.

4. Umformer nach einem der Ansprüche 1 bis 3, **dadurch gekennzeichnet, daß** die Transistoren (116) mit Hilfe von Klammern durch Pressung an die länglichen Abschnitte (14, 16, 18) gehalten sind.

5. Umformer nach Anspruch 4, **dadurch gekennzeichnet, daß** die länglichen Abschnitte (14, 16, 18) auf der den Transistoren (116) gegenüberliegenden Seite einen Hinterschnitt (24, 26, 30) aufweisen, mit denen ein Schenkel der U-förmigen Klammern zusammenwirkt.

6. Umformer nach einem der Ansprüche 1 bis 5, **dadurch gekennzeichnet, daß** die Platinenabschnitte (46, 48) in Nuten (34) der länglichen Abschnitte (14, 16, 18) eingeschoben sind.

7. Umformer nach Anspruch 3 und 6, **dadurch gekennzeichnet, daß** eine einteilige Platine (42) vorgesehen ist, die parallel zur Längsachse einen länglichen Schlitz (44) aufweist, wobei der sich jenseits vom Schlitz (44) erstreckende Platinenabschnitt (50) über die länglichen Abschnitte (14, 16, 18) übersteht.

8. Umformer nach Anspruch 2 und 7, **dadurch gekennzeichnet, daß** die dritte Potentialausgleichsschiene (84) auf dem überstehenden Platinenabschnitt (50) angebracht ist.

9. Umformer nach einem der Ansprüche 1 bis 8, **dadurch gekennzeichnet, daß** die Höhe der aufrecht stehenden flachen Stromschienen vom vorderen, die äußeren Anschlüsse aufweisenden Ende des Umformers nach hinten abnimmt und die ersten beiden Potentialausgleichsschienen (110, 112) nahe dem vorderen Ende angeordnet sind und eine die Steuerung enthaltende Steuerplatine (118) im hinteren Bereich auf den Stromschienen abgestützt und befestigt ist.

10. Umformer nach einem der Ansprüche 1 bis 9, **dadurch gekennzeichnet, daß** die Plus- und Minusschienen nach oben stehende und oben abgebogene Laschen (86, 96) aufweisen, auf denen flache Potentialausgleichsschienen (110, 112) anbringbar sind.

11. Umformer nach Anspruch 1, **dadurch gekennzeichnet, daß** die Befestigung mit Hilfe von Becherblindnieten erfolgt.

12. Umformer nach einem der Ansprüche 1 bis 9, **dadurch gekennzeichnet, daß** die Steuerplatine (118) auf hochstehenden und oben abgebogenen Laschen (90, 92) der Stromschienen und auf nach oben stehenden abgebogenen Laschen (102, 104) der dritten Potentialausgleichsschiene (84) angebracht ist.

13. Umformer nach einem der Ansprüche 1 bis 12, **dadurch gekennzeichnet, daß** die Stromschienen und/oder die dritte Potentialausgleichsschiene (84) über eine Reihe von Beinchen (108) mit der Platine (42) verlötet sind.

14. Umformer nach einem der Ansprüche 9 bis 13, **dadurch gekennzeichnet, daß** die Steuerplatine (118) über Abstandshalter, vorzugsweise aus Kunststoff, und über eine Schnappverbindung anbringbar ist.

15. Umformer nach Anspruch 12 und 14, **dadurch gekennzeichnet, daß** die Abstandshalter ihrerseits über eine Schnappverbindung mit Löchern (94, 106) der Laschen zusammenwirken.

16. Umformer nach einem der Ansprüche 7 bis 15, **dadurch gekennzeichnet, daß** die Ansteuerelektronik für die Transistoren (116) auf dem überstehenden Platinenabschnitt (50) angeordnet ist.

17. Umformer nach einem der Ansprüche 1 bis 16, **dadurch gekennzeichnet, daß** die Stromschienen und/oder die Potentialausgleichsschienen aus Kupferblechen geformt sind.

18. Umformer nach einem der Ansprüche 1 bis 17, **dadurch gekennzeichnet, daß** die Kondensatoren (80, 82) der Phasen asymmetrisch aufgeteilt sind.

## Claims

1. A converter for a three-phase motor in industrial trucks wherein power transistors are operated to generate a three-phase output a.c. voltage each in the branches of a bridge between a positive and a negative d.c. voltage and the phase reversal voltages can be tapped from a conductor bar each wherein the transistors are further mounted on a heat sink and a capacitor battery is connected to the d.c. potentials, **characterized by** the features that follow:
- The heat sink (10) has three parallel-spaced elongate portions (14, 16, 18).
- The transistors (116) of each phase are alternately mounted side by side on a portion (14, 16, 18) in an electrical insulation.
- The two compartments (32, 38), between the heat sink portions (14, 16, 18), have disposed therein p.c.b. portions (46, 48) to which the transistors (116) and the capacitors of the capacitor battery (80, 82) are connected, amongst others, wherein the p.c.b. portion (46) arranged in the wider compartment has two rows of transistors (116).
- Close to the rows of transistors (116), an array of three parallel conductor bars (60, 62, 64) each extending at a spacing is provided, out of which a first conductor bar is provided for a phase, a second conductor bar is provided for the negative potential, and a third conductor bar is provided for the positive potential, and
- Above the elongate heat sink (14, 16, 18), two potential equalisation bars (110, 112) are provided which extend transversely thereto and interconnect the negative and positive bars of the three conductor bar arrays (60, 62, 64).

2. The converter as claimed in claim 1, **characterized in that** a further potential equalisation bar (84) is provided which interconnects the negative bars of the phases via p-c.b. portions.

3. The converter as claimed in claim 1 or 2, **characterized in that** the elongate portions (14, 16, 18) are webs on an integrally formed heat sink (10) preferably manufactured by extrusion moulding.

4. The converter as claimed in any one of claims 1 to 3, **characterized in that** the transistors (116) are retained by means of clips by being pressed onto the elongate portions (14, 16, 18).

5. The converter as claimed in claim 4, **characterized in that** the elongate portions (14, 16, 18), on the side opposing the transistors (116), have an undercut (24, 26, 30), which undercuts are interacted with by a leg of the U-shaped clips.

6. The converter as claimed in any one of claims 1 to 5, **characterized in that** the p.c.b. portions (46, 48) are inserted into grooves (34) of the elongate portions (14, 16, 18).

7. The converter as claimed in claims 3 and 6, **characterized in that** an integrally formed p.c.b. (42) is provided which has an elongate slot (44) in parallel with the longitudinal axis and the printed p.c.b. portion (50) extending on the other side of the slot (44) projects beyond the elongate portions (14, 16, 18).

8. The converter as claimed in claims 2 and 7, **characterized in that** the third potential equaliser bar (84) is mounted on a projecting p.c.b. portion (50).

9. The converter as claimed in any one of claims 1 to 8, **characterized in that** the height of the upright flat conductor bars decreases to the rear from the front end having the external terminals of the converter and the two first potential equaliser bars (110, 112) are arranged close to the front end and a control p.c.b. (118) containing the control is supported and mounted on the conductor sbar in the rear region.

10. The converter as claimed in any one of claims 1 to 9, **characterized in that** the positive and negative bars have upright saddle terminals bent-off at top (86, 96) on which flat potential equaliser bars (110, 112) is adapted to be mounted.

11. The converter as claimed in claim 1, **characterized in that** mounting is performed by means of cup-type blanking rivets.

12. The converter as claimed in any one of claims 1 to 9, **characterized in that** the control p.c.b. (118) is mounted on upright saddle terminals bent-off at top (90, 92) of the conductor bars and on upright saddle terminals bent-off at top (102, 104) of the third potential equaliser bar (84).

13. The converter as claimed in any one of claims 1 to 12, **characterized in that** the conductor bars and/or the third potential equaliser bar (84) are soldered to the p.c.b. (42) via a series of small legs (108).

14. The converter as claimed in any one of claims 9 to 13, **characterized in that** the control p.c.b. (118) is adapted to be mounted via spacers, preferably those made of plastic, and via a snap-on mounting.

15. The converter as claimed in claims 12 and 14, **characterized in that** the spacers, in turn, interact with holes (94, 106) of the saddle terminals via a snap-on mounting.

16. The converter as claimed in claims 7 to 15, **characterized in that** the electronic devices driving the transistors (116) are disposed on the projecting p.c.b. portion (50).

17. The converter as claimed in any one of claims 1 to 16, **characterized in that** the conductor bars and/or potential equaliser bars are formed from sheet copper.

18. The converter as claimed in any one of claims 1 to 17, **characterized in that** the capacitors (80, 82) of the phases are subdivided asymmetrically.

## Revendications

1. Onduleur pour un moteur à courant triphasé dans des chariots de manutention, dans lequel des transistors de puissance sont utilisés pour la production d'une tension alternative de sortie triphasée respectivement dans les branches d'un pont entre une tension continue positive et une tension continue négative et les tensions alternatives de phase peuvent respectivement être prélevées sur une barre de courant, dans lequel en outre les transistors sont fixés à un dissipateur de chaleur et une batterie de condensateurs est raccordée aux potentiels de tension continue, **caractérisé par** les particularités suivantes :
- le dissipateur de chaleur (10) comporte trois parties (14, 16, 18) allongées disposées en parallèle et espacées
- les transistors de chaque phase sont fixés alternativement l'un à côté de l'autre en étant isolés électriquement à une partie (14, 16, 18)
- dans les deux compartiments (32, 38) entre les parties de dissipateur de chaleur (14, 16, 18) sont disposées des parties de platine (46, 48), auxquelles sont reliés entre autres les transistors (116) et les condensateurs de la batterie de condensateurs (80, 82), la partie de platine se trouvant dans le compartiment le plus large (46) comportant deux rangées de transistors (116)
- près des rangées de transistors (116) est prévu respectivement un dispositif de trois barres de courant parallèles et espacées (60, 62, 64), dont une première barre de courant est prévue pour une phase, une deuxième barre de courant pour la barre de courant de potentiel négatif et une troisième barre de courant pour le potentiel positif et
- au-dessus des parties allongées (14, 16, 18) de dissipateur de chaleur sont prévues deux barres de compensation de potentiel (110, 112) transversales à celles-ci, qui relient les unes aux autres les barres négatives et les barres positives des trois dispositifs de barres de courant (60, 62, 64).

2. Onduleur selon la revendication 1, **caractérisé en ce qu'**il est prévu une autre barre de compensation de potentiel (84), qui relie les unes aux autres les barres négatives des phases par des parties de platine.

3. Onduleur selon la revendication 1 ou 2, **caractérisé en ce que** les parties allongées (14, 16, 18) sont des ailes sur un dissipateur de chaleur (10) d'une seule pièce, fabriqué de préférence par extrusion.

4. Onduleur selon l'une des revendications 1 à 3, **caractérisé en ce que** les transistors (116) sont tenus à l'aide de brides de fixation par pression sur les parties allongées (14, 16, 18).

5. Onduleur selon la revendication 4, **caractérisé en ce que** les parties allongées (14, 16, 18) comportent sur le côté opposé aux transistors (116) une contre-entaille (24, 26, 30) avec lesquelles coopère une branche des brides en forme de U.

6. Onduleur selon l'une des revendications 1 à 5, **caractérisé en ce que** les parties de platine (46, 48) sont insérées dans des rainures (34) des parties allongées (14, 16, 18).

7. Onduleur selon les revendications 3 et 6, **caractérisé en ce qu'**il est prévu une platine d'une seule pièce (42), qui comporte une fente allongée (44) parallèle à l'axe longitudinal, la partie de platine (50) s'étendant au-delà de la fente (44) dépassant les parties allongées (14, 16, 18).

8. Onduleur selon les revendications 2 et 7, **caractérisé en ce que** la troisième barre de compensation de potentiel (84) est fixée sur la partie de platine qui dépasse (50).

9. Onduleur selon l'une des revendications 1 à 8, **caractérisé en ce que** la hauteur des barres de courant plates placées debout diminue de l'extrémité avant, comportant les raccordements extérieurs de l'onduleur vers l'arrière et les deux premières barres de compensation de potentiel (110, 112) sont disposées près de l'extrémité avant et une platine de commande (118) contenant la commande est supportée dans la zone arrière sur les barres de courant et fixée sur celles-ci.

10. Onduleur selon l'une des revendications 1 à 9, **caractérisé en ce que** les barres plus et moins comportent des attaches (86, 96) dressées vers le haut et pliées en haut sur lesquelles peuvent être fixées des barres de compensation de potentiel plates (110, 112).

11. Onduleur selon la revendication 1, **caractérisé en ce que** la fixation se fait à l'aide de rivets aveugles à cuvette.

12. Onduleur selon l'une des revendications 1 à 9, **caractérisé en ce que** la platine de commande (118) est fixée sur des attaches (90, 92) surélevées et pliées en haut des barres de courant et sur des attaches (102, 104) pliées dressées vers le haut de la troisième barre de compensation de potentiel (84).

13. Onduleur selon l'une des revendications 1 à 12, **caractérisé en ce que** les barres de courant et/ou la troisième barre de compensation de potentiel (84) sont brasées à la platine (42) par une rangée de petites jambes (108).

14. Onduleur selon l'une des revendications 9 à 13, **caractérisé en ce que** la platine de commande (118) peut être fixée par des pièces d'écartement, de préférence en matière synthétique, et par un assemblage à enclenchement.

15. Onduleur selon les revendications 12 et 14, **caractérisé en ce que** les pièces d'écartement coopèrent pour leur part par un assemblage à enclenchement avec des trous (94, 106) des attaches.

16. Onduleur selon l'une des revendications 7 à 15, **caractérisé en ce que** l'électronique de commande des transistors (116) est fixée sur la partie de platine qui dépasse (50).

17. Onduleur selon l'une des revendications 1 à 16, **caractérisé en ce que** les barres de courant et/ou les barres de compensation de potentiel sont formées de feuilles de cuivre.

18. Onduleur selon l'une des revendications 1 à 17, **caractérisé en ce que** les condensateurs (80, 82) des phases sont répartis de manière dissymétrique.
